# EUROPEAN PATENT APPLICATION

(11) **EP 3 038 429 A1**
(43) Date of publication of application: **29.06.2016**
(21) Application number: 13881324.1
(22) Date of filing: 24.12.2013
(51) Int. Cl.: H04W 88/08

(54) **DISTRIBUTED BASE STATION NETWORKING METHOD AND APPARATUS, AND COMPUTER READABLE STORAGE MEDIUM**

(30) Priority: 22.08.2013 CN 201310370805
(71) Applicant: ZTE Corporation, Shenzhen, Guangdong 518057 (CN)
(72) Inventor: TIAN, Boliang, Shenzhen Guangdong 518057 (CN); FENG, Yongli, Shenzhen Guangdong 518057 (CN)
(74) Representative: Tischner, Oliver
(86) International application number: PCT/CN2013/090373
(87) International publication number: WO 2014/161359

(57) **Abstract**

A method for networking of a distributed base station is provided, which includes that: at least one Ethernet interface is added for each of Radio Remote Units (RRUs) and Base Band Units (BBUs), and Internet Protocol (IP) addresses are configured for the RRUs and the BBUs for the Ethernet; the RRUs and the BBUs access the Ethernet through their own at least one Ethernet interface; and base band signals are transmitted between the BBUs and the RRUs based on the configured IP addresses and the added Ethernet interfaces of the RRUs and the BBUs. In addition, the present disclosure further provides an apparatus for networking of a distributed base station and a computer-readable storage medium.

## Description

### TECHNICAL FIELD

The present disclosure relates to a networking technology, and in particular to a method and apparatus for networking of a distributed base station, and a computer-readable storage medium.

### BACKGROUND

A distributed base station is obtained by dividing a conventional repeater into a Base Band Unit (BBU) and a Radio Remote Unit (RRU), wherein the BBU is responsible for base band processing of a radio signal, and the RRU is responsible for variable frequency modulation and signal amplification of a base band signal; and the BBU and the RRU are directly connected by an optical fiber, and communicate through a Common Public Radio Interface (CPRI) optical interface.

In a CPRI optical link network, one BBU corresponds to at least one RRU, and each RRU is directly connected with a unique BBU. On an uplink of an RRU, the RRU receives a base band signal from a BBU corresponding to the RRU through a CPRI optical interface, performs processing such as shaping filtering, peak clipping and digital pre-distortion on the base band signal, and converts the frequency of the base band signal to an intermediate frequency and then to a radio frequency and then sends the converted signal; and on a downlink of the RRU, the RRU performs a series of processing such as selective frequency amplification on a received terminal signal, and then transmits the terminal signal to a unique BBU corresponding to the RRU through the CPRI optical interface. Thus it can be seen that each RRU is required to transmit a base band signal to a corresponding BBU in a point-to-point connection with the RRU. In a point-to-point networking manner, an erection distance between an RRU and a corresponding BBU is not so long, and is substantially between 200 meters and 40 kilometers, but high optical fiber cost and labor cost consumption is generated; and obviously, cascade networking, ring networking and chained networking of the BBU and the RRU may require a longer optical fiber and higher material cost, construction cost, maintenance cost and the like.

### SUMMARY

In order to solve the existing technical problem, the embodiments of the present disclosure provides a method and apparatus for networking of a distributed base station, and a computer-readable storage medium, which may improve networking flexibility, improve base band resource processing efficiency, increase a transmission rate and also reduce cost.

In order to achieve the purpose, the technical solutions of the embodiments of the present disclosure are implemented as follows.

An embodiment of the present disclosure provides a method for networking of a distributed base station, which may include that: at least one Ethernet interface is added for each of RRUs and BBUs, and Internet Protocol (IP) addresses are configured for the RRUs and the BBUs for Ethernet; the RRUs and the BBUs access the Ethernet through their own at least one Ethernet interface; and the method may further include that:
base band signals are transmitted between the BBUs and the RRUs based on the configured IP addresses and the added Ethernet interfaces of the RRUs and the BBUs.

In the solution, the method may further include that:
one BBU is selected as a reference source for communication between the BBUs and a core network; and
the other BBUs communicate with the core network through the BBU serving as the reference source by taking the BBU serving as the reference source as a reference.

In the solution, the method may include that:
when the BBUs and the RRUs are networked in a net networking manner, it is configured that the base band signals are transmitted between the RRUs and any BBU accessing the Ethernet, and/or, it is configured that the base band signals are transmitted between the BBUs and any RRU accessing the Ethernet;
when the BBUs and the RRUs are networked in a point-to-point networking manner, it is configured that the base band signals are transmitted between one selected RRU and one selected BBU;
when the BBUs and the RRUs are networked in a star networking manner, it is configured that the base band signals are transmitted between one selected BBU and at least two selected RRUs;
when the BBUs and the RRUs are networked in a chained networking manner, it is configured that the base band signals are transmitted in a chained serial manner between at least two RRUs and one selected BBU; and
when the BBUs and the RRUs are networked in a ring networking manner, it is configured that the base band signals are transmitted between at least two RRUs and one selected BBU, and it is configured that one RRU at a distance of most hops away from the one selected BBU and one RRU at a distance of fewest hops away from the one selected BBU in at least two RRUs which are in serial ring connection perform base band signal transmission with the selected BBU respectively.

In the solution, the step that the base band signals are transmitted between the BBUs and the RRUs based on the configured IP addresses and the added Ethernet interfaces of the RRUs and the BBUs may include that:
in a downlink, the BBUs receive signals from the core network, perform base band processing on the signals, and send processed base band signals to the RRUs with a specified IP address through the Ethernet interfaces, and the RRUs receive the base band signals through own Ethernet interfaces, perform shaping filtering, peak clipping and digital pre-distortion processing on the received base band signals, convert the base band signals into intermediate frequency signals, convert the intermediate frequency signals into radio frequency signals, and send power-amplified radio frequency signals to an antenna; and
in an uplink, the RRUs receive signals from a terminal, convert the signals into intermediate frequency signals after selective frequency amplification processing, convert the intermediate frequency signals into base band signals, and send the base band signals to the BBUs with specified IP addresses through the Ethernet interfaces, and the BBUs receive the base band signals through own Ethernet interfaces, perform base band processing on the received signals, and send the processed signals to the core network.

In the solution, the method may include that:
when the BBU serving as the reference source is cascaded with the other BBUs in a net manner, it is configured that the BBU serving as the reference source is cascaded with any other BBU accessing the Ethernet, and any other BBU communicates with the core network through the BBU serving as the reference source;
when the BBU serving as the reference source is cascaded with the other BBUs in a point-to-point manner, it is configured that the BBU serving as the reference source is cascaded with one BBU selected from the other BBUs, and the BBU selected from the other BBUs communicates with the core network through the BBU serving as the reference source;
when the BBU serving as the reference source is cascaded with the other BBUs in a star manner, it is configured that the BBU serving as the reference source is cascaded with at least two BBUs selected from the other BBUs, and the at least two BBUs selected from the other BBUs communicate with the core network through the BBU serving as the reference source;
when the BBU serving as the reference source is cascaded with the other BBUs in a chained manner, it is configured that at least two of the other BBUs are in chained serial cascading with the BBU serving as the reference source, and the at least two of the other BBUs communicate with the core network through the BBU serving as the reference source; and
when the BBU serving as the reference source is cascaded with the other BBUs in a ring manner, it is configured that at least two of the other BBUs are in serial ring connection with the BBU serving as the reference source, and it is configured that one BBU at a distance of most hops away from the BBU serving as the reference source and one BBU at a distance of fewest hops away from the BBU serving as the reference source in at least two of the other BBUs which are in serial ring connection communicate with the core network through the BBU serving as the reference source respectively.

An embodiment of the present disclosure further provides an apparatus for networking of a distributed base station, the distributed base station including RRUs and BBUs, the apparatus including an addition unit, a configuration unit, an access unit and a transmission unit, wherein
the addition unit may be configured to add at least one Ethernet interface for each of the RRUs and the BBUs;
the configuration unit may be configured to configure IP addresses for the RRUs and the BBUs for Ethernet;
the access unit may be configured to enable the RRUs and the BBUs to access the Ethernet through own at least one Ethernet interface; and
the transmission unit may be configured to transmit base band signals between the BBUs and the RRUs based on the configured IP addresses and the added Ethernet interfaces of the RRUs and the BBUs.

In the solution, the apparatus may further include a selection unit and a communication unit, wherein
the selection unit may be configured to select one BBU as a reference source for communication between the BBUs and a core network; and
the communication unit may be configured to enable the other BBUs to communicate with the core network through the BBU serving as the reference source by taking the BBU serving as the reference source as a reference.

In the solution, the configuration unit may further be configured as follows:
when the BBUs and the RRUs are networked in a net networking manner, the configuration unit may configure that the base band signals are transmitted between the RRUs and any BBU accessing the Ethernet, and/or, the configuration unit may configure that the base band signals are transmitted between the BBUs and any RRU accessing the Ethernet;
when the BBUs and the RRUs are networked in a point-to-point networking manner, the configuration unit may configure that the base band signals are transmitted between one selected RRU and one selected BBU;
when the BBUs and the RRUs are networked in a star networking manner, the configuration unit may configure that the base band signals are transmitted between one selected BBU and at least two selected RRUs;
when the BBUs and the RRUs are networked in a chained networking manner, the configuration unit may configure that the base band signals are transmitted in a chained serial manner between at least two RRUs and one selected BBU; and
when the BBUs and the RRUs are networked in a ring networking manner, the configuration unit may configure that the base band signals are transmitted between at least two RRUs and one selected BBU and one RRU at a distance of most hops away from the one selected BBU and one RRU at a distance of fewest hops away from the one selected BBU in at least two RRUs which are in serial ring connection perform base band signal transmission with the one selected BBU respectively.

In the solution, the configuration unit may further be configured as follows:
when the BBU serving as the reference source is cascaded with the other BBUs in a net manner, the configuration unit may configure that the BBU serving as the reference source is cascaded with any other BBU accessing the Ethernet, and the communication unit may enable any other BBU to communicate with the core network through the BBU serving as the reference source;
when the BBU serving as the reference source is cascaded with the other BBUs in a point-to-point manner, the configuration unit may configure that the BBU serving as the reference source is cascaded with one BBU selected from the other BBUs, and the communication unit may enable the BBU selected from the other BBUs to communicate with the core network through the BBU serving as the reference source;
when the BBU serving as the reference source is cascaded with the other BBUs in a star manner, the configuration unit may configure that the BBU serving as the reference source is in clock cascading with at least two BBUs selected from the other BBUs, and the communication unit may enable the at least two BBUs selected from the other BBUs to communicate with the core network through the BBU serving as the reference source;
when the BBU serving as the reference source is cascaded with the other BBUs in a chained manner, the configuration unit may configure that at least two of the other BBUs are in chained serial cascading with the BBU serving as the reference source, and the communication unit may enable the at least two of the other BBUs to communicate with the core network through the BBU serving as the reference source; and
when the BBU serving as the reference source is cascaded with the other BBUs in a ring manner, the configuration unit may configure that at least two of the other BBUs are in serial ring connection with the BBU serving as the reference source, and the communication unit may enable one BBU at a distance of most hops away from the BBU serving as the reference source and one BBU at a distance of fewest hops away from the BBU serving as the reference source in at least two of the other BBUs which are in serial ring connection to communicate with the core network through the BBU serving as the reference source respectively.

An embodiment of the present disclosure further provides a computer-readable storage medium, which may include a set of instructions, the instructions being configured to execute the abovementioned method for networking of a distributed base station.

According to the method and apparatus for networking of a distributed base station in the embodiments of the present disclosure, at least one Ethernet interface is added for each of the RRUs and the BBUs, and IP addresses are configured for the RRUs and the BBUs for Ethernet; the RRUs and the BBUs access the Ethernet through own at least one Ethernet interface; and base band signals are transmitted between the BBUs and the RRUs based on the configured IP addresses and the added Ethernet interfaces of the RRUs and the BBUs. By utilizing the technical solutions of the embodiments of the present disclosure, base band resource processing efficiency of the BBUs is improved, a probability of incapability of the base station in normal communication is reduced, and cost and the like are reduced.

### BRIEF DESCRIPTION OF THE DRAWINGS

Fig. 1 is a flowchart of a method for networking of a distributed base station according to an embodiment of the present disclosure;
Fig. 2 is a schematic diagram of a net networking manner of BBUs and RRUs according to an embodiment of the present disclosure;
Fig. 3 is a schematic diagram of a point-to-point networking manner of BBUs and RRUs according to an embodiment of the present disclosure;
Fig. 4 is a schematic diagram of a star networking manner of BBUs and RRUs according to an embodiment of the present disclosure;
Fig. 5 is a schematic diagram of a chained networking manner of BBUs and RRUs according to an embodiment of the present disclosure;
Fig. 6 is a schematic diagram of a ring networking manner of BBUs and RRUs according to an embodiment of the present disclosure;
Fig. 7 is a schematic diagram of a net cascading manner of BBUs according to an embodiment of the present disclosure;
Fig. 8 is a schematic diagram of a point-to-point cascading manner of master and slave BBUs according to an embodiment of the present disclosure;
Fig. 9 is a schematic diagram of a star cascading manner of master and slave BBUs according to an embodiment of the present disclosure;
Fig. 10 is a schematic diagram of a chained cascading manner of master and slave BBUs according to an embodiment of the present disclosure;
Fig. 11 is a schematic diagram of a ring cascading manner of master and slave BBUs according to an embodiment of the present disclosure; and
Fig. 12 is a structure schematic diagram of an apparatus for networking of a base station according to an embodiment of the present disclosure.

### DETAILED DESCRIPTION

A base band signal is transmitted between an RRU and its unique corresponding BBU through a CPRI optical interface in a CPRI optical network link; in a process of transmitting a base band signal, there exist the following problems:
1: base band processing of uplink and downlink data is required to be implemented on a BBU corresponding to a current RRU, and when there are more RRUs in point-to-point connection with the BBU, the allocation of base band processing resources of the BBU is limited, which may cause low efficiency in base band signal processing;
2: base band processing of uplink and downlink data is required to be implemented on a BBU corresponding to a current RRU, the current RRU corresponds to only one BBU, and when the BBU or a base band processing unit on the BBU fails, the current RRU also cannot work normally, which may further cause influence on normal communication;
3: a base band signal is transmitted between a RRU and its corresponding BBU through a CPRI optical interface, and a maximum rate of an adopted CPRI protocol is 9.8304Gbps; in view of a development trend of the BBU and the RRU, it is urgent to increase the rate;
4: the RRU may only be physically directly connected with its corresponding BBU, and such a physical connection relationship is unlikely to be modified once being determined, which may cause inflexibility in networking of the RRU and the corresponding BBU; and
5: a RRU may only form point-to-point interconnection with a BBU, and point-to-point networking, net networking and star networking of the BBU and the RRU may require a longer optical fiber and higher material cost, construction cost, maintenance cost and the like.

In the embodiments of the present disclosure: on the premise of preserving the CPRI optical interfaces of RRUs and BBUs, at least one Ethernet interface is added for each of the RRUs and the BBUs, and the BBUs added with the Ethernet interfaces communicate with the RRUs added with the Ethernet interfaces by Media Access Control (MAC) addresses and IP addresses for the Ethernet; and slave BBUs added with Ethernet interfaces communicate with a core network through a master BBU added with an Ethernet interface. With the technical solutions of the embodiments of the present disclosure, networking manners are flexible, and point-to-point networking, star networking, chained networking, ring networking, net networking and the like may be implemented; and for different networking modes, a one-to-many relationship between the BBUs and the RRUs may be realized, and a many-to-many relationship between the BBUs and the RRUs may also be realized, so that limited base band resource allocation of the BBUs may be alleviated, a probability of incapability of a distributed base station in normal communication is reduced, and production and maintenance cost and the like may be reduced.

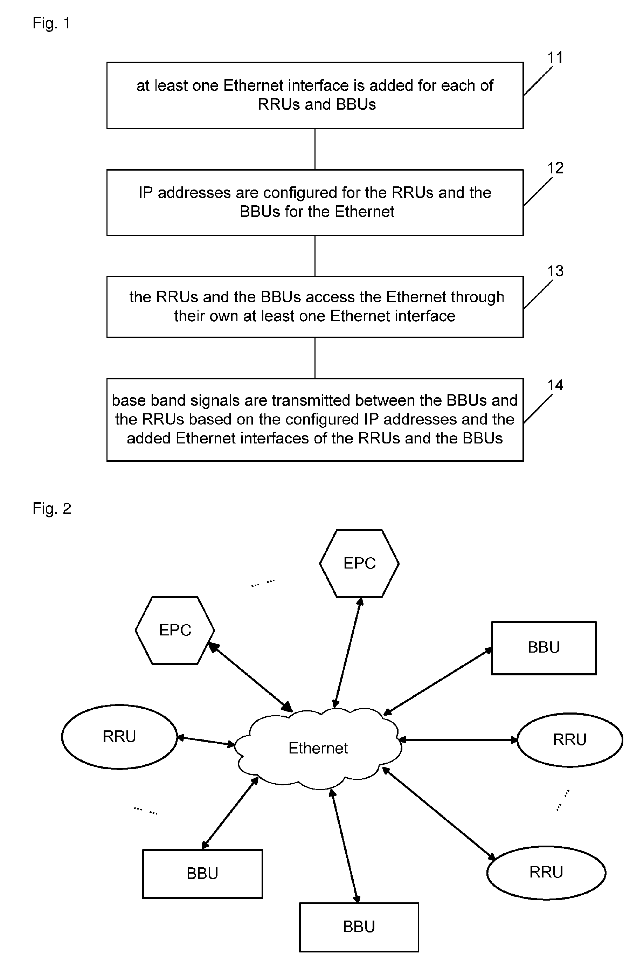

An embodiment of the present disclosure provides a method for networking of a distributed base station, and as shown in Fig. 1, the method includes:
Step 11: at least one Ethernet interface is added for each of RRUs and BBUs,
   wherein the Ethernet interfaces may specifically be Ethernet optical interfaces;
Step 12: IP addresses are configured for the RRUs and the BBUs for the Ethernet;
Step 13: the RRUs and the BBUs access the Ethernet through their own at least one Ethernet interface; and
Step 14: base band signals are transmitted between the BBUs and the RRUs based on the configured IP addresses and the added Ethernet interfaces of the RRUs and the BBUs.

The method further includes that: one BBU is selected as a reference source for communication between the BBUs and a core network, wherein the core network includes an Evolved Packet Core (EPC). The other BBUs communicate with the core network through the BBU serving as the reference source by taking the BBU serving as the reference source as a reference.

Here, the BBU serving as the reference source may be called a master BBU; the other BBUs are called slave BBUs; that is, the slave BBUs communicate with the core network through the master BBU; specifically, the master BBU receives a signal from the EPC, and transmits the received signal to the slave BBUs; and the master BBU receives signals from the slave BBUs, and transmits the received signals to the core network. Here, a specific implementation process for communication between the master and slave BBUs is a conventional art, and will not be elaborated herein.

Here, a process of transmitting the base band signals between the BBUs added with the Ethernet interfaces and the RRUs added with the Ethernet interfaces is introduced in a subsequent solution.

In the embodiment of the present disclosure, a manual configuration manner and an automatic configuration manner may be adopted for the IP addresses configured for the BBUs and RRUs added with the Ethernet interfaces. Here, the manual configuration is to manually input the IP addresses into the BBUs and RRUs of a base station by a network administrator during the base station initialization; and the automatic configuration is implemented through application software of a background management system of the base station.

An Institute of Electrical and Electronics Engineers 802.3 (IEEE 802.3) protocol formulated by the IEEE is a public protocol of Ethernet communication technologies, and supports Ethernet rates of 10Mbps, 100Mbps, 1 Gbps, 10Gbps, 40Gbps, 100Gbps and the like. In IEEE 802.3, an MAC address and an IP address are allocated to each Ethernet terminal such as a BBU added with an Ethernet interface and a RRU added with an Ethernet interface, and the MAC address and the IP address are utilized for identification and communication.

Fig. 2 is a schematic diagram of a net networking manner of BBUs and RRUs according to an embodiment of the present disclosure. As shown in Fig. 2, in the embodiment of the present disclosure, by virtue of extension of communication interfaces of the BBUs and the RRUs, it is configured that base band signals are transmitted between the BBUs and any RRU accessing the Ethernet; and/or, it is configured that base band signals are transmitted between the RRUs and any BBU accessing the Ethernet; it is configured that the BBUs communicate with the EPC or another core network; and a master BBU may communicate with a slave BBU with a specified IP address. Each BBU added with an Ethernet interface may be interconnected with the EPC through an optical fiber or a twisted pair, or may be interconnected with other core networks through optical fibers or twisted pairs, may perform base band signal transmission with other BBUs which are added with Ethernet interfaces and access the Ethernet through IP addresses, and may also perform base band signal transmission with any RRU added with an Ethernet interface through an IP address.

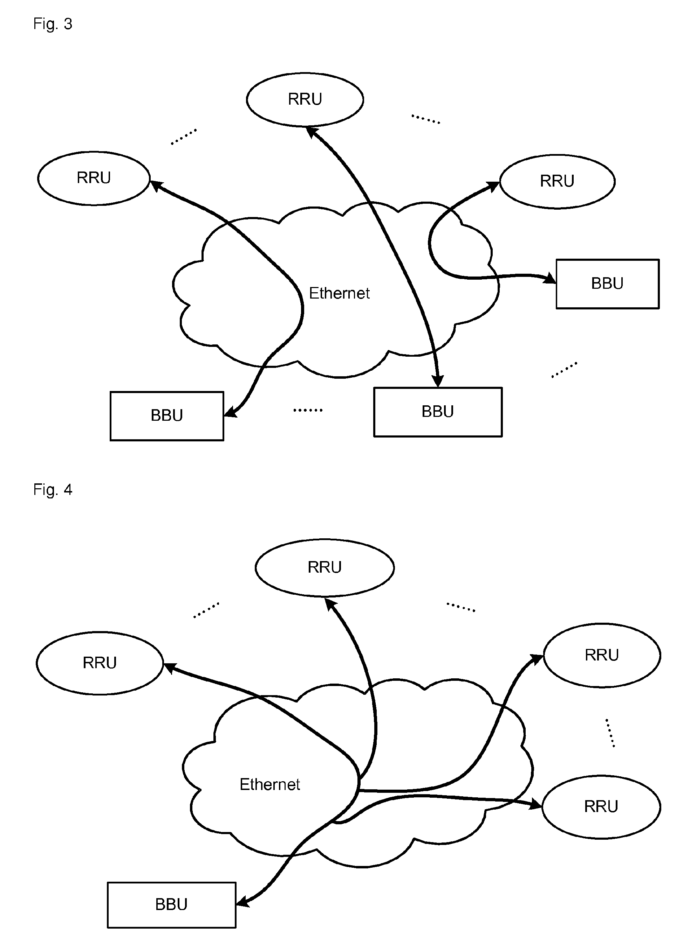

Fig. 3 is a schematic diagram of a point-to-point networking manner of BBUs and RRUs according to an embodiment of the present disclosure, and as shown in Fig. 3, in the point-to-point networking manner, it is configured that base band signals are transmitted between one selected RRU and one selected BBU.

Fig. 4 is a schematic diagram of a star networking manner of BBUs and RRUs according to an embodiment of the present disclosure, and as shown in Fig. 4, in the star networking manner, it is configured that base band signals are transmitted between one selected BBU and at least two selected RRUs; that is, each BBU added with an Ethernet interface may be interconnected with at least two RRUs added with Ethernet interfaces for transmitting the base band signals through IP addresses.

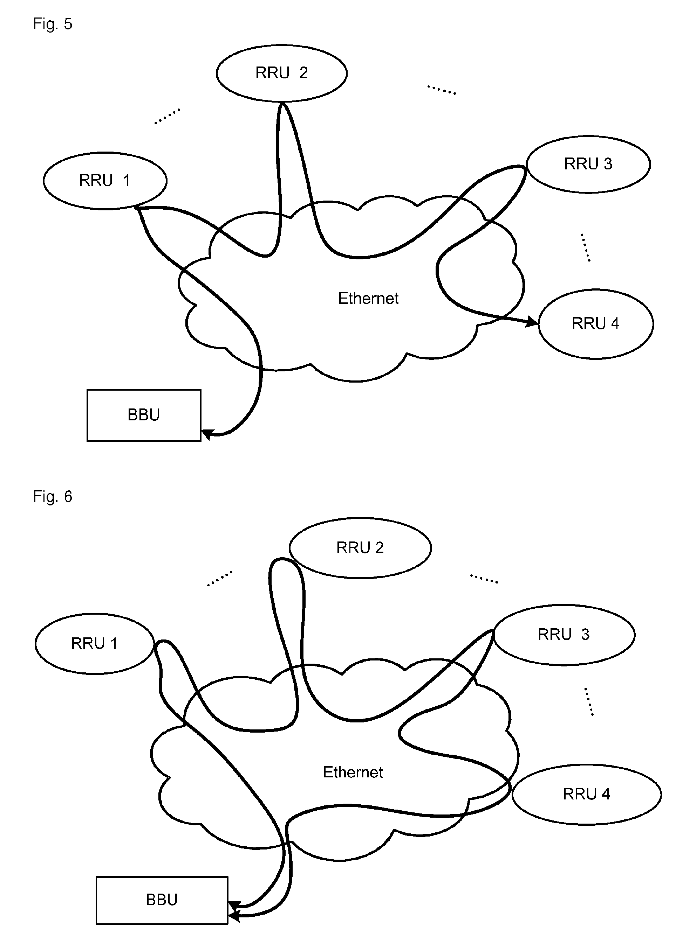

Fig. 5 is a schematic diagram of a chained networking manner of BBUs and RRUs according to an embodiment of the present disclosure, and as shown in Fig. 5, in the chained networking manner, it is configured that base band signals are transmitted between at least two RRUs and one selected BBU in a chained serial manner; and RRU1∼RRU4 are in chained serial connection, and base band signals are finally transmitted to the selected BBU by RRU1 after chained transmission by RRU1 -RRU4.

Fig. 6 is a schematic diagram of a ring networking manner of BBUs and RRUs according to an embodiment of the present disclosure, and as shown in Fig. 6, in the ring networking manner, it is configured that base band signals are transmitted between at least two RRUs and one selected BBU, and one RRU at a distance of most hops away from the selected BBU and one RRU at a distance of fewest hops away from the selected BBU in at least two RRUs which are in serial ring connection perform base band signal transmission with the selected BBU respectively. RRU1∼RRU4 are in serial ring connection, RRU4 is the RRU at the distance of most hops away from the selected BBU, and RRU1 is the RRU at the distance of fewest hops away from the selected BBU; RRU1 and RRU4 may perform base band signal transmission with the selected BBU respectively; in addition, RRU2 and RRU3 may also perform base band signal transmission with the selected BBU through RRU1; and RRU2 and RRU3 may also perform base band signal transmission with the selected BBU through RRU4. Compared with the chained networking manner, the ring networking manner has the advantages that when a transmission link, passing through RRU1, from a certain node such as RRU2 and the selected BBU is broken or fails, RRU2 may perform base band signal transmission with the selected BBU through RRU3 and RRU4, so that effectiveness of the link for base band signal transmission is ensured.

In the above introduction about different networking manners shown in Fig. 2 to Fig. 6, a configuration relationship between the RRUs and the BBUs may be realized by a management background of the base station. Now, the process of transmitting the base band signals between the BBUs added with Ethernet interfaces and the RRUs added with Ethernet interfaces will be further described with net networking shown in Fig. 2 as an example. Base band signal transmissions in other networking manners are similar to the following process.

In the net networking manner shown in Fig. 2, BBU1, with an IP address B, of base station1 is interconnected with RRU1, with an IP address A, of base station 1.

Specifically, in a downlink: BBU1 of base station 1 performs base band processing on a signal from an EPC or other core network according to the IEEE 802.3 protocol, and sends a processed base band signal to RRU1 with the IP address A through an Ethernet interface, and RRU1 receives the base band signal through its own Ethernet interface, performs a series of processing such as shaping filtering, peak clipping and digital pre-distortion on the received base band signal, converts the base band signal into an intermediate frequency signal, converts the intermediate frequency signal into a radio frequency signal, and sends a power-amplified radio signal to an antenna.

In an uplink: RRU1 of base station 1 receives a signal from a terminal, converts the signal into an intermediate frequency signal after selective frequency amplification processing, converts the intermediate frequency signal into a base band signal, and sends the base band signal to BBU1 with the IP address B through the Ethernet interface, and BBU1 receives the base band signal through its own Ethernet interface, performs further base band processing on the received base band signal according to the IEEE 802.3 protocol, and sends the processed signal to the EPC or to said other core network.

In addition, in the embodiment of the present disclosure, the current RRU may also be directly connected with its corresponding BBU through an optical fiber. Networking manners in the case of direct connection also include: net networking, point-to-point networking, star networking, chained networking, ring networking and the like.

In the embodiment of the present disclosure, a master BBU may be cascaded with a slave BBU, and cascading manners include: net cascading, point-to-point cascading, star cascading, chained cascading, ring cascading and the like.

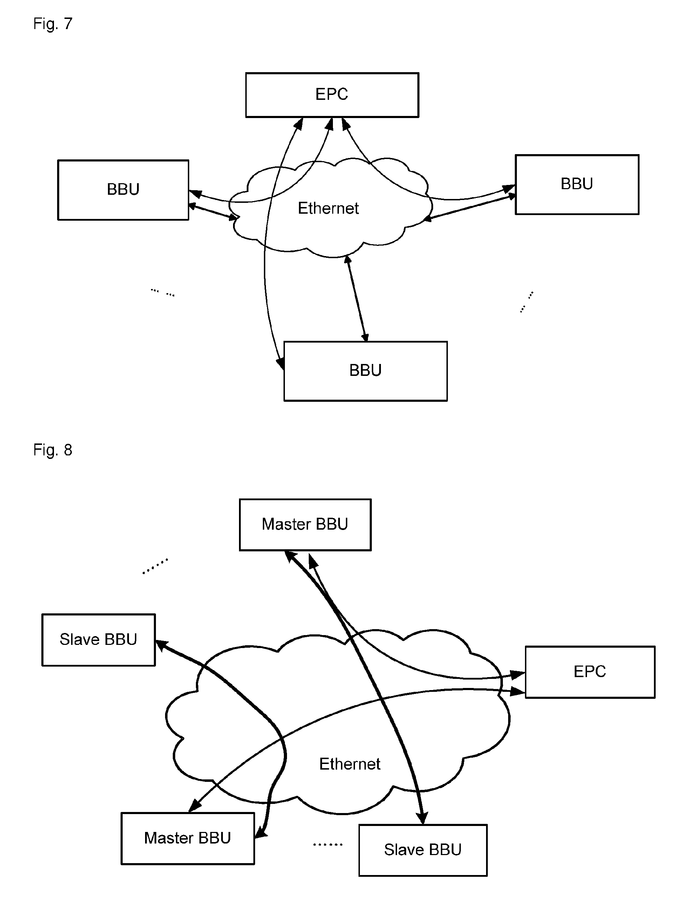

Fig. 7 is a schematic diagram of a net cascading manner of master and slave BBUs according to an embodiment of the present disclosure, and it is configured that the master BBU may be cascaded with any slave BBU accessing the Ethernet through an IP address and any slave BBU communicates with the EPC through the master BBU.

Fig. 8 is a schematic diagram of a point-to-point cascading manner of master and slave BBUs according to an embodiment of the present disclosure, and it is configured that the master BBU is cascaded with a selected slave BBU and the selected slave BBU communicates with the EPC through the master BBU.

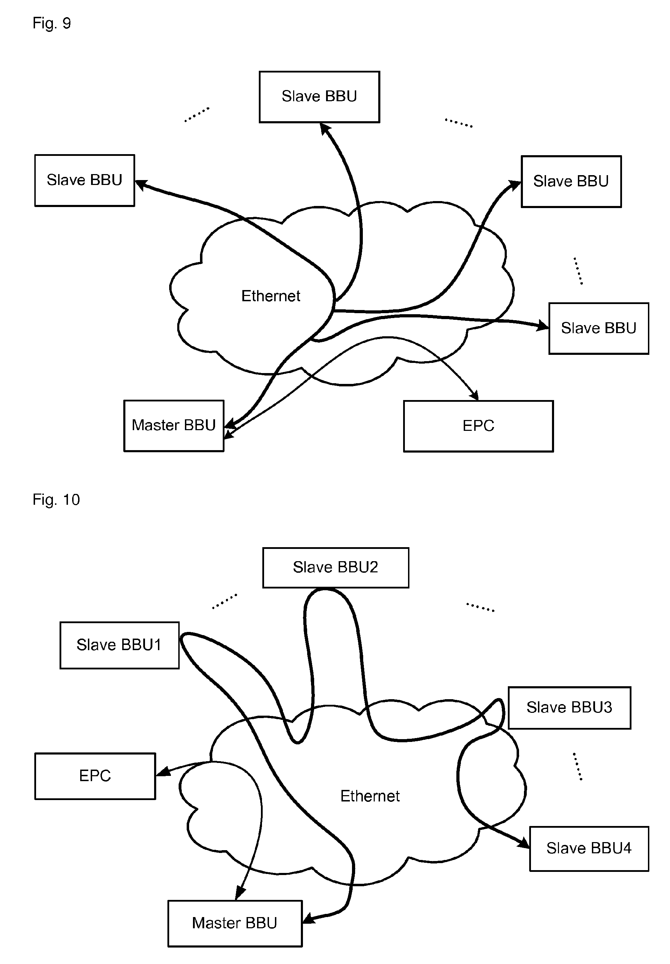

Fig. 9 is a schematic diagram of a star cascading manner of master and slave BBUs according to an embodiment of the present disclosure, and it is configured that the master BBU is cascaded with at least two selected slave BBUs and the at least two selected slave BBUs communicate with the core network through the master BBU.

Fig. 10 is a schematic diagram of a chained cascading manner of master and slave BBUs according to an embodiment of the present disclosure, and it is configured that at least two slave BBUs are in chained serial cascading with the master BBU serving as the reference source; and the master BBU and slave BBU1∼slave BBU4 are in chained serial cascading, and base band signals from each BBU are finally sent to the EPC by the master BBU serving as the reference source after chained transmission.

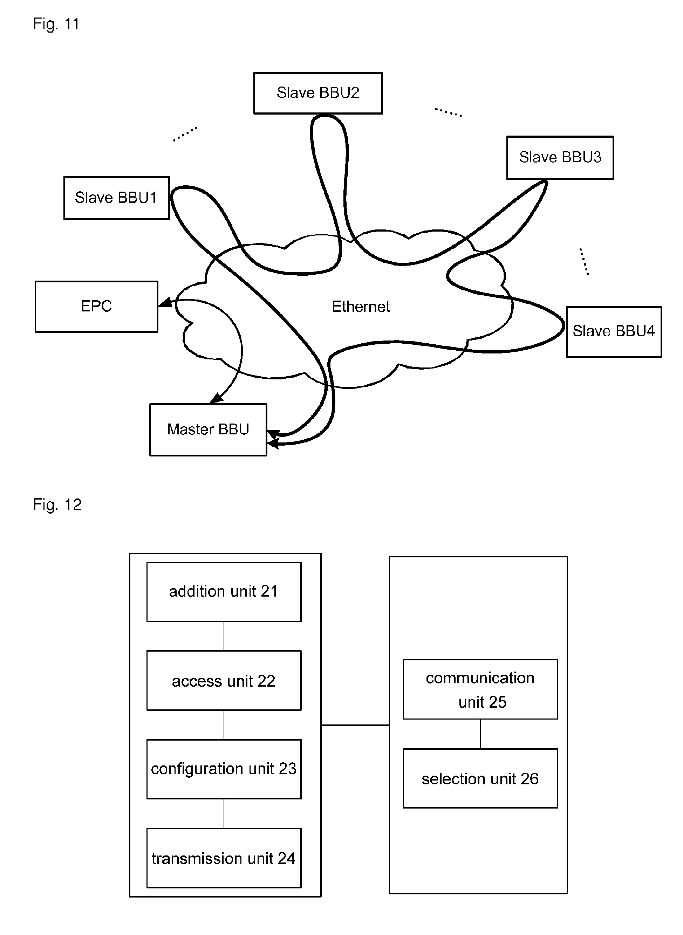

Fig. 11 is a schematic diagram of a ring cascading manner of master and slave BBUs according to an embodiment of the present disclosure, it is configured that at least two of the other BBUs are in serial ring connection with the BBU serving as the reference source, and it is configured that one slave BBU at a distance of most hops away from the master BBU and one slave BBU at a distance of fewest hops away from the master BBU in at least two of the other BBUs which are in serial ring connection communicate with the core network through the master BBU respectively. Slave BBU1∼slave BBU4 are slave BBUs which are in serial ring connection, slave BBU4 is the slave BBU at the distance of most hops away from the master BBU, and slave BBU1 is the slave BBU at the distance of fewest hops away from the master BBU; and slave BBU2 and slave BBU3 communicate with the core network through slave BBU4, slave BBU1 and the master BBU.

Based on the abovementioned method for networking of a distributed base station, an embodiment of the present disclosure further provides an apparatus for networking of a distributed base station, the distributed base station including RRUs and BBUs; and as shown in Fig. 12, the apparatus includes an addition unit 21, an access unit 22, a configuration unit 23, a transmission unit 24, a communication unit 25 and a selection unit 26, wherein
the addition unit 21 is configured to add at least one Ethernet interface for each of the RRUs and the BBUs; the Ethernet interfaces may specifically be Ethernet optical interfaces;
the configuration unit 22 is configured to configure IP addresses for the RRUs and the BBUs for the Ethernet;
the access unit 23 is configured to enable the RRUs and the BBUs to access the Ethernet through their own at least one Ethernet interface; and
the transmission unit 24 is configured to transmit base band signals between the BBUs and the RRUs based on the configured IP addresses and the added Ethernet interfaces of the RRUs and the BBUs.

The selection unit 26 is configured to select one BBU as a reference source for communication between the BBUs and a core network; and
the communication unit 25 is configured to enable the other BBUs to communicate with the core network through the BBU serving as the reference source by taking the BBU serving as the reference source as a reference.

Here, the BBU serving as the reference source is called a master BBU; and the other BBUs are called slave BBUs.

Here, configuration of IP addresses for the BBUs and the RRUs may be implemented by software control of a background system of the base station over the configuration unit 23, and configuration of IP addresses for the BBUs and the RRUs may also be implemented by manually inputting the IP addresses.

In a practical application, all of the addition unit 21, the access unit 22, the configuration unit 23, the transmission unit 24, the communication unit 25 and the selection unit 26 may be implemented by a Central Processing Unit (CPU), or a Digital Signal Processor (DSP), or a Field-Programmable Gate Array (FPGA) or the like; and the CPU, the DSP and the FPGA are all arranged in the distributed base station.

Networking manners for the BBUs and the RRUs in the embodiments of the present disclosure are shown in Fig. 2 to Fig. 6, and include: net networking, point-to-point networking, star networking, chained networking, ring networking and the like.

Specifically, when the BBUs and the RRUs are networked in the net networking manner, the configuration unit 23 configures that the base band signals are transmitted between the RRUs and any BBU accessing the Ethernet, and/or, the configuration unit 23 configures that the base band signals are transmitted between the BBUs and any RRU accessing the Ethernet, and configures that the BBUs communicate with an EPC or another core network;
when the BBUs and the RRUs are networked in the point-to-point networking manner, the configuration unit 23 configures that the base band signals are transmitted between one selected RRU and one selected BBU;
when the BBUs and the RRUs are networked in the star networking manner, the configuration unit 23 configures that the base band signals are transmitted between one selected BBU and at least two selected RRUs;
when the BBUs and the RRUs are networked in the chained networking manner, the configuration unit 23 configures that the base band signals are transmitted in a chained serial manner between at least two RRUs and one selected BBU; and
when the BBUs and the RRUs are networked in the ring networking manner, the configuration unit 23 configures that the base band signals are transmitted between at least two RRUs and one selected BBU, and one RRU at a distance of most hops away from the selected BBU and one RRU at a distance of fewest hops away from the selected BBU in at least two RRUs which are in serial ring connection perform base band signal transmission with the selected BBU respectively.

In addition, cascading manners between the master and slave BBUs in the embodiments of the present disclosure are shown in Fig. 7 to Fig. 11, and include: net cascading, point-to-point cascading, star cascading, chained cascading, ring cascading and the like.

When the master BBU is cascaded with the slave BBUs in a net manner, the configuration unit 23 configures that the master BBU is cascaded with any slave BBU accessing the Ethernet, and the communication unit 25 enables any slave BBU to communicate with the EPC through the master BBU;
when the master BBU is cascaded with the slave BBUs in a point-to-point manner, the configuration unit 23 configures that the master BBU is cascaded with one selected slave BBU, and the communication unit 25 enables the selected slave BBU to communicate with the EPC through the master BBU;
when the master BBU is cascaded with the slave BBUs in a star manner, the configuration unit 23 configures that the master BBU is cascaded with at least two selected slave BBUs, and the communication unit 25 enables the at least two selected slave BBUs to communicate with the EPC through the master BBU;
when the master BBU is cascaded with the slave BBUs in a chained manner, the configuration unit 23 configures that at least two slave BBUs are in chained serial cascading with the master BBU, and the communication unit 25 enables the at least two slave BBUs to communicate with the EPC through the master BBU; and
when the master BBU is cascaded with the slave BBUs in a ring manner, the configuration unit 23 configures that at least two slave BBUs are in serial ring connection with the master BBU, and the communication unit 25 enables one slave BBU at a distance of most hops away from the master BBU and one slave BBU at a distance of fewest hops away from the master BBU in at least two slave BBUs which are in serial ring connection to communicate with the EPC through the master BBU respectively.

In the apparatus of the embodiment of the present disclosure, the base band transmission between the BBUs and the RRUs and the base band transmission between the master BBU and the slave BBUs refer to description in the abovementioned method, and will not be elaborated herein.

An embodiment of the present disclosure further provides a computer-readable storage medium, which may include a set of instructions, the instructions being configured to execute the abovementioned method for networking of a distributed base station.

From the above, according to the method and apparatus for networking of a distributed base station and a computer-readable storage medium provided by the embodiments of the present disclosure, at least one Ethernet interface is added for each of RRUs and BBUs, and IP addresses are configured for the RRUs and the BBUs for the Ethernet; the RRUs and the BBUs access the Ethernet through their own at least one Ethernet interface; the base band signals are transmitted between the BBUs and the RRUs based on the configured IP addresses and the added Ethernet interfaces of the RRUs and the BBUs; and the slave BBUs communicate with the EPC through the master BBU. By utilizing the technical solutions of the embodiments of the present disclosure, the following five beneficial effects may be achieved:
1: in different networking manners, the BBUs and the RRUs may form a one-to-many corresponding relationship, or may also form a many-to-many relationship; therefore, compared with the conventional art where base band processing of the uplink and downlink data is required to be implemented on a unique BBU corresponding to the current RRU, the embodiments of the present disclosure have the advantage that the RRU may be interconnected with other BBU to enable said other BBU to perform base band processing on the signal of the RRU when the current BBU interconnected with the RRU does not have enough base band processing resources; in addition, the RRU may be simultaneously connected with multiple BBUs in the net manner, and the uplink and downlink data of the RRU may be simultaneously processed by the multiple BBUs; obviously, with the technical solutions of the embodiments of the present disclosure, efficiency of the BBUs in base band processing may be improved;
2: the current RRU may be interconnected with multiple BBUs, so that when the current BBU or a base band processing unit on the current BBU fails, the current RRU may be interconnected to other BBU to implement normal communication, and the probability of incapability in normal communication is further reduced;
3: the IEEE 802.3 protocol supports rates of 10Mbps∼100Gbps, and the rates are high and almost more than 10 times the maximum rate (9.8304Gbps) of the CPRI protocol;
4: the technology of the embodiments of the present disclosure supports both a direct connection between the RRUs and BBUs in the CPRI optical network link and interconnection between the RRUs and the BBUs in the Ethernet; under the condition that physical connections of the RRUs and the BBUs are determined, point-to-point networking, star networking, net networking, chained networking, ring networking and the like may be configured, and different networking manners may also be switched, so that flexibility of the networking manners between the RRUs and the BBUs is improved; and
   5: the BBUs and the RRUs are interconnected by the IEEE 802.3 protocol in the embodiments of the present disclosure, so that compared with the conventional art where the RRUs require cables erected to the BBUs, the embodiments of the present disclosure have the advantage that the BBUs and the RRUs only require cables erected to the Ethernet and networking cost and the like are reduced.

Those skilled in the art should know that the embodiments of the present disclosure may be provided as a method, a system or a computer program product. Therefore, the present disclosure may adopt a pure hardware embodiment, a pure software embodiment and a combined software and hardware embodiment. Moreover, the present disclosure may adopt a computer program product implemented on one or more computer-available storage media (including, but not limited to, a disk memory, a Compact Disc Read-Only Memory (CD-ROM) and an optical memory) including computer-available program codes.

The present disclosure is described with reference to flowcharts and/or block schematic diagrams of the method, equipment (system) and computer program product according to the embodiment of the present disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or other programmable data processing equipment, so that a series of operating steps are executed on the computer or other programmable data processing equipment to generate processing implemented by the computer, and steps for realizing the function specified in one flow or many flows in the flowcharts and/or one block or many blocks in the block schematic diagrams are provided by the instructions executed on the computer or the other programmable data processing equipment.

The above are only the preferred embodiments of the present disclosure and not intended to limit the scope of protection of the present disclosure. All modifications made according to the principle of the present disclosure shall be understood to fall within the scope of protection of the present disclosure.

## Claims

1. A method for networking of a distributed base station, comprising:
adding at least one Ethernet interface for each of Radio Remote Units (RRUs) and Base Band Units (BBUs), and configuring Internet Protocol (IP) addresses for the RRUs and the BBUs for Ethernet; accessing, by the RRUs and the BBUs, the Ethernet through own at least one Ethernet interface; and
the method further comprising:
transmitting base band signals between the BBUs and the RRUs based on the configured IP addresses and the added Ethernet interfaces of the RRUs and the BBUs.

2. The method for networking of a distributed base station according to claim 1, further comprising:
selecting one BBU as a reference source for communication between the BBUs and a core network; and
enabling the other BBUs to communicate with the core network through the BBU serving as the reference source by taking the BBU serving as the reference source as a reference.

3. The method for networking of a distributed base station according to claim 1, further comprising:
when the BBUs and the RRUs are networked in a net networking manner, configuring that the base band signals are transmitted between the RRUs and any BBU accessing the Ethernet, and/or, configuring that the base band signals are transmitted between the BBUs and any RRU accessing the Ethernet;
when the BBUs and the RRUs are networked in a point-to-point networking manner, configuring that the base band signals are transmitted between one selected RRU and one selected BBU;
when the BBUs and the RRUs are networked in a star networking manner, configuring that the base band signals are transmitted between one selected BBU and at least two selected RRUs;
when the BBUs and the RRUs are networked in a chained networking manner, configuring that the base band signals are transmitted in a chained serial manner between at least two RRUs and one selected BBU; and
when the BBUs and the RRUs are networked in a ring networking manner, configuring that the base band signals are transmitted between at least two RRUs and one selected BBU, and configuring that one RRU at a distance of most hops away from the one selected BBU and one RRU at a distance of fewest hops away from the one selected BBU in at least two RRUs which are in serial ring connection perform base band signal transmission with the one selected BBU respectively.

4. The method for networking of a distributed base station according to claim 3, wherein transmitting the base band signals between the BBUs and the RRUs based on the configured IP addresses and the added Ethernet interfaces of the RRUs and the BBUs comprises:
in a downlink, the BBUs receive signals from a core network, perform base band processing on the signals, and send processed base band signals to the RRUs with a specified IP address through the Ethernet interfaces, and the RRUs receive the base band signals through own Ethernet interfaces, perform shaping filtering, peak clipping and digital pre-distortion processing on the received base band signals, convert the base band signals into intermediate frequency signals, convert the intermediate frequency signals into radio frequency signals, and send power-amplified radio frequency signals to an antenna; and
in an uplink, the RRUs receive signals from a terminal, converts the signals into intermediate frequency signals after selective frequency amplification processing, converts the intermediate frequency signals into base band signals, and send the base band signals to the BBUs with specified IP addresses through the Ethernet interfaces, and the BBUs receive the base band signals through own Ethernet interfaces, perform base band processing on the received signals, and send the processed signals to the core network.

5. The method for networking of a distributed base station according to claim 2, comprising:
when the BBU serving as the reference source is cascaded with the other BBUs in a net manner, configuring that the BBU serving as the reference source is cascaded with any other BBU accessing the Ethernet, and enabling any other BBU to communicate with the core network through the BBU serving as the reference source;
when the BBU serving as the reference source is cascaded with the other BBUs in a point-to-point manner, configuring that the BBU serving as the reference source is cascaded with one BBU selected from the other BBUs, and enabling the BBU selected from the other BBUs to communicate with the core network through the BBU serving as the reference source;
when the BBU serving as the reference source is cascaded with the other BBUs in a star manner, configuring that the BBU serving as the reference source is cascaded with at least two BBUs selected from the other BBUs, and enabling the at least two BBUs selected from the other BBUs to communicate with the core network through the BBU serving as the reference source;
when the BBU serving as the reference source is cascaded with the other BBUs in a chained manner, configuring that at least two of the other BBUs are in chained serial cascading with the BBU serving as the reference source, and enabling the at least two of the other BBUs to communicate with the core network through the BBU serving as the reference source; and
when the BBU serving as the reference source is cascaded with the other BBUs in a ring manner, configuring that at least two of the other BBUs are in serial ring connection with the BBU serving as the reference source, and configuring that one BBU at a distance of most hops away from the BBU serving as the reference source and one BBU at a distance of fewest hops away from the BBU serving as the reference source in at least two of the other BBUs which are in serial ring connection communicate with the core network through the BBU serving as the reference source respectively.

6. An apparatus for networking of a distributed base station, the distributed base station comprising Radio Remote Units (RRUs) and Base Band Units (BBUs); the apparatus comprising an addition unit, a configuration unit, an access unit and a transmission unit, wherein
the addition unit is configured to add at least one Ethernet interface for each of the RRUs and the BBUs;
the configuration unit is configured to configure Internet Protocol (IP) addresses for the RRUs and the BBUs for Ethernet;
the access unit is configured to enable the RRUs and the BBUs to access the Ethernet through own at least one Ethernet interface; and
the transmission unit is configured to transmit base band signals between the BBUs and the RRUs based on the configured IP addresses and the added Ethernet interfaces of the RRUs and the BBUs.

7. The apparatus for networking of a distributed base station according to claim 6, further comprising a selection unit and a communication unit, wherein
the selection unit is configured to select one BBU as a reference source for communication between the BBUs and a core network; and
the communication unit is configured to enable the other BBUs to communicate with the core network through the BBU serving as the reference source by taking the BBU serving as the reference source as a reference.

8. The apparatus for networking of a distributed base station according to claim 6 or 7, wherein the configuration unit is further configured as follows:
when the BBUs and the RRUs are networked in a net networking manner, the configuration unit configures that the base band signals are transmitted between the RRUs and any BBU accessing the Ethernet, and/or, the configuration unit configures that the base band signals are transmitted between the BBUs and any RRU accessing the Ethernet;
when the BBUs and the RRUs are networked in a point-to-point networking manner, the configuration unit configures that the base band signals are transmitted between one selected RRU and one selected BBU;
when the BBUs and the RRUs are networked in a star networking manner, the configuration unit configures that the base band signals are transmitted between one selected BBU and at least two selected RRUs;
when the BBUs and the RRUs are networked in a chained networking manner, the configuration unit configures that the base band signals are transmitted in a chained serial manner between at least two RRUs and one selected BBU; and
when the BBUs and the RRUs are networked in a ring networking manner, the configuration unit configures that the base band signals are transmitted between at least two RRUs and one selected BBU, and configures that one RRU at a distance of most hops away from the one selected BBU and one RRU at a distance of fewest hops away from the one selected BBU in at least two RRUs which are in serial ring connection perform base band signal transmission with the one selected BBU respectively.

9. The apparatus for networking of a distributed base station according to claim 7, wherein the configuration unit is further configured as follows:
when the BBU serving as the reference source is cascaded with the other BBUs in a net manner, the configuration unit configures that the BBU serving as the reference source is cascaded with any other BBU accessing the Ethernet, and the communication unit enables any other BBU to communicate with the core network through the BBU serving as the reference source;
when the BBU serving as the reference source is cascaded with the other BBUs in a point-to-point manner, the configuration unit configures that the BBU serving as the reference source is cascaded with one BBU selected from the other BBUs, and the communication unit enables the BBU selected from the other BBUs to communicate with the core network through the BBU serving as the reference source;
when the BBU serving as the reference source is cascaded with the other BBUs in a star manner, the configuration unit configures that the BBU serving as the reference source is in clock cascading with at least two BBUs selected from the other BBUs, and the communication unit enables the at least two BBUs selected from the other BBUs to communicate with the core network through the BBU serving as the reference source;
when the BBU serving as the reference source is cascaded with the other BBUs in a chained manner, the configuration unit configures that at least two of the other BBUs are in chained serial cascading with the BBU serving as the reference source, and the communication unit enables the at least two of the other BBUs to communicate with the core network through the BBU serving as the reference source; and
when the BBU serving as the reference source is cascaded with the other BBUs in a ring manner, the configuration unit configures that at least two of the other BBUs are in serial ring connection with the BBU serving as the reference source, and the communication unit enables one BBU at a distance of most hops away from the BBU serving as the reference source and one BBU at a distance of fewest hops away from the BBU serving as the reference source in at least two of the other BBUs which are in serial ring connection to communicate with the core network through the BBU serving as the reference source respectively.

10. A computer-readable storage medium, comprising a set of instructions, the instructions being configured to execute the method for networking of a distributed base station according to any one of claims 1 to 5.
